# EUROPEAN PATENT APPLICATION

(11) **EP 3 376 628 A1**
(43) Date of publication of application: **19.09.2018**
(21) Application number: 17207689.5
(22) Date of filing: 15.12.2017
(51) Int. Cl.: H02J 3/38

(54) **SOLAR POWER GENERATION SYSTEM, DC/DC CONVERTER AND POWER CONDITIONER**

(30) Priority: 14.03.2017 JP 2017048060
(71) Applicant: OMRON CORPORATION, Kyoto-shi, Kyoto 600-8530 (JP)
(72) Inventor: SANO, Akihiko, KYOTO, 600-8530 (JP); TSUBOTA, Yasuhiro, KYOTO, 600-8530 (JP); TOYOURA,, Nobuyuki, KYOTO, 600-8530 (JP)
(74) Representative: 2K Patentanwälte Blasberg Kewitz & Reichel

(57) **Abstract**

A solar power generation system (100) which has a solar cell (110), converts an output of the solar cell (110) to predetermined AC power and outputs the converted AC power includes a voltage application part configured to apply an DC voltage to the solar cell (110) and to perform an output recovery operation, and a stop control part (153) configured to stop applying of the DC voltage when a stop condition is satisfied after the DC voltage is applied. Further, when an output correspondence information acquisition part (151) that acquires output correspondence information indicating a value corresponding to an output value of the solar cell (110) is provided, stop control part (153) determines that the stop control part (153) satisfies the stop condition and stops the applying of the DC voltage when the output value corresponding to the output correspondence information exceeds a threshold value.

## Description

### BACKGROUND

### Technical Field

The disclosure relates to a solar power generation system, a DC/DC converter and a power conditioner.

### Description of Related Art

In a solar power generation system which generates electric power using sunlight, a solar cell is connected to a commercial electric power system or a load device via a power conditioner including an inverter and so on, and the electric power generated by the solar cell is supplied to the commercial electric power system or the load device.

Recently, the voltage of solar power generation systems has been increased, and transformerless type inverters have been increasing due to their higher efficiency. Accordingly, a large potential difference may occur between a cell of the solar cell and a grounded frame. It is known that this is a factor which causes a leakage current and causes a potential induced degradation (PID) phenomenon by adding external factors such as humidity and temperature (high temperature and high humidity).

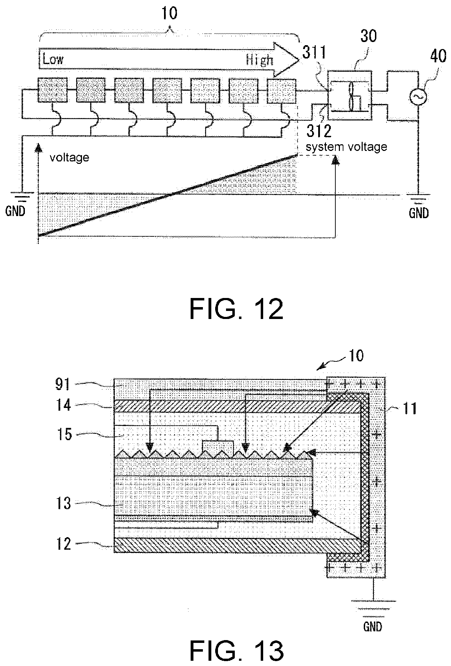

Fig. 12 is a conceptual diagram for explaining an example of the PID phenomenon. Fig. 12 illustrates one solar cell string 10 in a solar cell array of the solar power generation system. The solar cell string 10 is formed by connecting a plurality of solar cell modules (solar cell panels) 1 in series and is connected to a commercial power system via a power conditioner 30. That is, each of the solar cell modules 1 of the solar cell string 10 receives sunlight in the daytime and generates electric power, and thus a potential difference is generated between a positive side input terminal 311 and a negative side input terminal 312.

Fig. 13 is a diagram schematically illustrating a structure of the solar cell module 1. As illustrated in Fig. 13, the solar cell module 1 has a frame 11, a back sheet 12, a cell 13, a glass 14, and a sealing material 15.

The cell 13 is a device having a semiconductor layer (power generation layer) which converts light energy to electric power by a photovoltaic effect. A glass 14 is provided on a light receiving surface side of the cell 13, the back sheet 12 is provided on a non-light receiving surface side of the cell 13, and the sealing material 15 is filled between the glass 14 and the back sheet 12 and between the glass 14 and the cell 13 to seal the cell 13. The frame 11 is provided on an outer perimeter portion of the solar cell module 1 and is used as a fixing member fixed to a support base or the like when the solar cell module 1 is installed. Further, the frame 11 is a conductive metal and is grounded.

As illustrated in Fig. 12, a ground potential of the cell 13 of each of the solar cell modules 1 connected in series is positive in the solar cell module 1 on the input terminal 311 side and is negative in the solar cell module 1 on the input terminal 312 side. When a ground potential difference becomes large and a leakage current occurs between the cell 13 and the frame 11 of the solar cell module 1 or between moisture 91 attached to a glass surface and the cell 13 as indicated by dashed arrows in Fig. 13, sodium ions of the glass 14 or the like may move to the cell 13, and movement of electrons in the cell 13 may be inhibited, and thus performance deterioration of the cell 13, that is, the PID phenomenon, may be caused. For example, in the case in which the cell of the solar cell module 1 uses a p-type semiconductor, performance deterioration tends to occur when a negative ground potential is generated. Further, in the case in which the cell of the solar cell module 1 uses an n-type semiconductor, the performance deterioration tends to occur when a positive ground potential is generated.

### [Prior Art Document]

### [Non-Patent Documents]

[Non-Patent Document] Mega Solar - Business/ Trouble/, Nikkei Business Publications, Inc., [accessed September 13, 2016], Internet http://techon.nikkeibp.co.jp/atcl/feature/15/302961/010500010/?ST=msb&P=1

### SUMMARY

Since an output reduction due to the PID appears more conspicuously as the ground potential of the solar cell module increases, with the recent increase in voltage of solar cell systems, the problems due to PID have become more severe.

In response, there is also proposed a recovery device which restores the output reduction due to the PID phenomenon by applying a voltage to the solar cell module so that a potential difference opposite to the potential difference causing the PID phenomenon is generated. However, the recovery takes a reasonable period of time, and when the output reduction occurs, a worker has to go to the site, install the recovery device and recover the solar cell module, and then the worker has to remove the recovery device later and return, which is very troublesome work.

For this reason, keeping the recovery device installed at the solar cell system and consistently applying the voltage to the solar cell module so that the output reduction due to the PID phenomenon does not occur can be considered. However, if the voltage is always applied, power is wastefully consumed.

Therefore, it is an object of the present disclosure to provide a technique for appropriately recovering an output reduction due to PID.

To solve the above-described problems, a solar power generation system of the present disclosure, which has a solar cell, converts an output of the solar cell to predetermined AC power and outputs the converted AC power, includes a voltage application part configured to apply a DC voltage to the solar cell and to perform an output recovery operation, and a stop control part configured to stop application of the DC voltage when a stop condition is satisfied after the DC voltage is applied.

Therefore, when the stop condition is satisfied, the output recovery operation can be stopped, and it is possible to appropriately restore the output reduction due to PID without continuing the output recovery operation unnecessarily.

In the solar power generation system, the stop condition may be reception of a stop signal transmitted by an operation of a manager. Therefore, the output recovery operation can be stopped by the operation of the manager, and as long as the stop signal can be sent, the output recovery operation can be stopped, for example, from a remote place.

The solar power generation system may further include an output correspondence information acquisition part configured to acquire output correspondence information indicating a value corresponding to an output value of the solar cell, and when the output value corresponding to the output correspondence information exceeds a threshold value, it may be determined that the stop control part satisfies the stop condition, and the application of the DC voltage may be stopped.

The solar power generation system may further include an output correspondence information acquisition part configured to acquire output correspondence information indicating a value corresponding to an output value of the solar cell, and a start control part configured to determine that an operation condition is satisfied and enable application of the DC voltage by the voltage application part when the output value corresponding to the output correspondence information does not exceed a threshold value.

The solar power generation system may further include an output measurement part configured to measure an output of the solar cell, and an output reduction determination part configured to compare a measurement result of the output with a reference value and to determine that the output of the solar cell is reduced when the measurement result is lower than the reference value, the start control part may determine that the output reduction condition is satisfied when it is determined that the output of the solar cell is reduced, and the application of the DC voltage to the solar cell may start when the operation condition and an output reduction condition are satisfied.

In the solar power generation system, the solar cell may include a plurality of solar cell strings, the output measurement part may measure an output of each solar cell string in the plurality of solar cell strings, and the output reduction determination part may compare the measurement result of the output of each solar cell string with an output of another solar cell string as a reference value.

In the solar power generation system, when a first stop condition is set to a case in which the output value corresponding to the output correspondence information exceeds a threshold value and the first stop condition is satisfied, the stop control part may stop the application of the DC voltage by the voltage application part, the start control part may be in a standby state in which the application of the DC voltage by the voltage application part is restarted when the operation condition and the output reduction condition are satisfied next, and when a second stop condition is set to a case in which the number of times, a period of time or an electric power amount of the application of the DC voltage by the voltage application part exceeds a threshold value and the second stop condition is satisfied, the stop control part may stop the application of the DC voltage by the voltage application part, and even when the operation condition and the output reduction condition are satisfied next, the start control part may not restart the application of the DC voltage by the voltage application part.

The solar power generation system may further include a mode selection part configured to acquire a type of the solar cell and to select a mode assigned to the acquired type of the solar cell in advance, the voltage application part may have a plurality of modes for varying an application state of the DC voltage according to the type of the solar cell, and the application of the DC voltage may be performed according to the mode selected by the mode selection part.

The solar power generation system may further include a recovery time measurement part configured to measure a recovery time current flowing through the solar cell when an output recovery operation is performed by applying the DC voltage to the solar cell, and when the measured voltage or the measured current deviates from a predetermined range, the stop control part may stop the application of the DC voltage.

To solve the above-described problems, a DC/DC converter of the present disclosure is a DC/DC converter used in the solar power generation system.

To solve the above-described problems, a power conditioner of the present disclosure includes a non-insulated type DC/DC converter configured to boost a DC voltage from the solar cell input from an input terminal at a predetermined boosting ratio and to output the DC voltage from an output terminal, and an inverter configured to convert the DC voltage output from the output terminal of the DC/DC converter into an AC voltage.

According to the present disclosure, it is possible to appropriately recover the output reduction due to PID.

### BRIEF DESCRIPTION OF THE DRAWINGS

Fig. 1 is a diagram illustrating a configuration of a solar power generation system according to a first embodiment.
Fig. 2 is a diagram illustrating a circuit configuration of the solar power generation system according to the first embodiment (in the daytime).
Fig. 3 is a diagram illustrating the circuit configuration of the solar power generation system according to the first embodiment (at nighttime).
Fig. 4 is a diagram illustrating an example of an inverter and an AC voltage measuring circuit.
Fig. 5 is a diagram illustrating a flow of a PID recovery process according to the first embodiment.
Fig. 6 is a diagram illustrating a configuration of a solar power generation system according to a second embodiment.
Fig. 7 is a diagram illustrating a flow of a PID recovery process according to the second embodiment.
Fig. 8 is a diagram illustrating a flow of a PID recovery process according to a third embodiment.
Fig. 9 is a diagram illustrating a configuration of a solar power generation system according to a fourth embodiment.
Fig. 10 is a diagram illustrating a flow of a PID recovery process according to the fourth embodiment.
Fig. 11 is a diagram illustrating a flow of a PID recovery process according to a fifth embodiment.
Fig. 12 is a conceptual diagram for explaining an example of a PID phenomenon.
Fig. 13 is a diagram schematically illustrating a structure of a solar cell module.

### DESCRIPTION OF THE EMBODIMENTS

Hereinafter, a specific embodiment to which the present technology is applied will be described with reference to the drawings.

### <First embodiment>

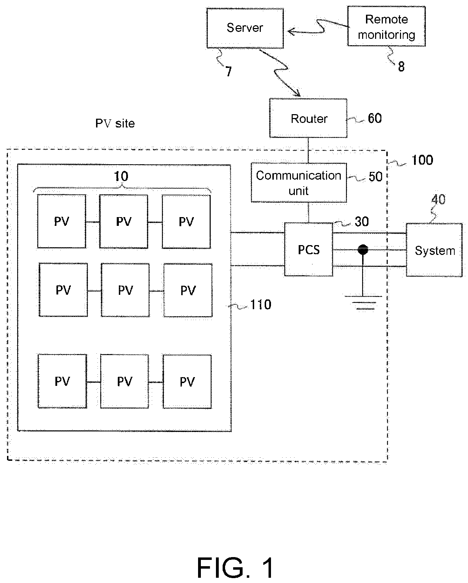

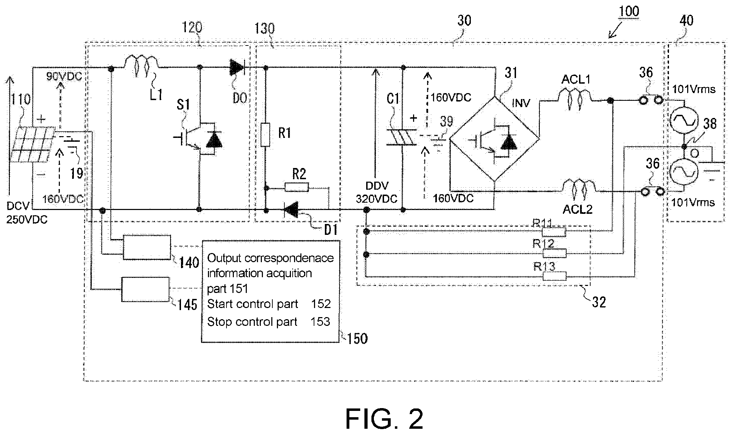

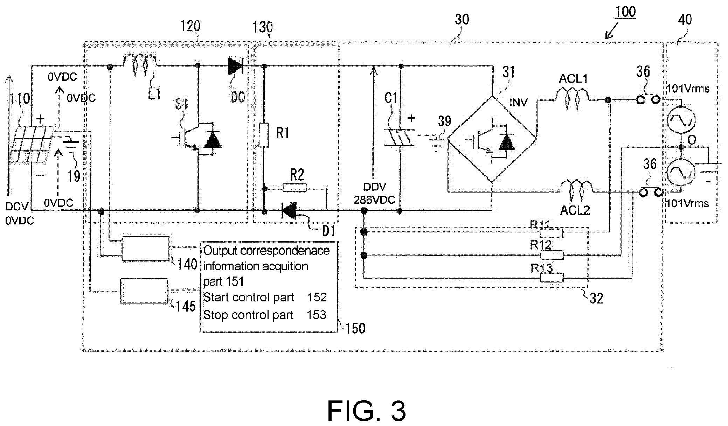

Fig. 1 is a diagram illustrating a configuration of a solar power generation system according to a first embodiment, and Figs. 2 and 3 are diagrams illustrating a circuit configuration of the solar power generation system according to the first embodiment. In Fig. 1, a solar power generation system 100 includes a solar cell 110 and a power conditioner (also referred to as a power conditioning system (PCS)) 30 and is connected to a commercial power system or a load device via a distribution board 40. Further, the solar power generation system 100 according to the first embodiment includes a communication unit 50 and is capable of communicating with other devices via a router 60.

The solar cell 110 is formed by connecting a plurality of solar cell strings 10 in parallel, each of which is constituted with a plurality of solar cell modules 1 connected in series. Each of the solar cell modules 1 is a module which converts sunlight energy into electric energy by a photovoltaic effect and outputs the electric energy as direct current power. The solar cell module 1 is, for example, a known configuration illustrated in Fig. 13 and has a structure in which a panel having a cell 13 sealed between a glass 14 and a back sheet 12 is held by a frame 11. Further, although Fig. 13 schematically illustrates one cell 13, in the solar cell module 1, a plurality of cells 13 are provided and connected in series by an electrode pattern 16, and a plurality of serially connected cells 13 are connected in parallel. The cells 13 are connected to an output terminal (not illustrated) of the solar cell module 1, and electric power generated by each cell 13 is output from the output terminal. Since the frame 11 is grounded separately from internal circuits of the cells 13 or the like and the cell 13 has a potential difference (ground potential) with the frame 11 or the like, occurrence of PID due to the ground potential is suppressed as will be described later.

The power conditioner 30 includes a DC/DC converter 120 which converts an output from the solar cell 110 into a predetermined DC voltage (boosting in the embodiment) or an inverter 31 which converts DC power output from the DC/DC converter 120 into AC power, and supplies the AC power output from the inverter 31 to the commercial power system or the load device. Also, the power conditioner 30 includes a system interconnection relay 36 and a control part 150, and the control part 150 controls connection (system interconnection) and disconnection with the commercial power system.

The DC/DC converter 120 connected to the solar cell 110 is a non-insulated boosting circuit having a reactor L1, a boosting switching element S1 and a diode D1.

One end of the reactor L1 is connected to a positive electrode of the solar cell 110 and the other end thereof is connected to an anode of the diode D1 and one end of the switching element S1 on a high potential side.

An anode of a diode D0 is connected to the reactor L1 and one end of the switching element S 1 on the high potential side, and a cathode thereof is connected to a positive electrode of an output terminal of the DC/DC converter 120. That is, the reactor L1 and the diode D1 are connected in series on a positive electrode side line of the DC/DC converter 120.

The switching element S1 is connected in parallel with the solar cell 110. One end of the switching element S1 on the high potential side is connected to a positive electrode of the solar cell 110 and the positive electrode of the output terminal of the DC/DC converter 120. One end of the switching element S 1 on a low potential side is connected to a negative electrode of the solar cell 110 and a negative electrode of the output terminal of the DC/DC converter 120. The switching element S1 is driven by a driving circuit (not illustrated) to perform switching and also intermittently charges and discharges the reactor L1 to perform boosting.

For example, it is sufficient if the switching element S1 is a device which performs the switching, such as a metal-oxide-semiconductor (MOS) field effect transistor, an insulated gate bipolar transistor (IGBT), a bipolar transistor, a thyristor, or the like, and in the embodiment, an IGBT is used.

The DC/DC converter 120 boosts a DC voltage (for example, 250 V) input from the solar cell 110 to a predetermined voltage (for example, 320 V) by the switching operation of the switching element S 1.

When an output of the solar cell 110 is less than a predetermined value, for example, during nighttime or the like, a potential adjustment part 130 applies a voltage of an external power system to the solar cell via the inverter 31 and sets the ground potential of the solar cell to be positive. The potential adjustment part 130 of the embodiment includes resistors R1 and R2 and the diode D1. A cathode of the diode D1 is connected to a negative electrode of the solar cell 110, and the anode thereof is connected to a negative electrode of the inverter 31. The resistor R1 is connected between the positive and negative electrodes of the solar cell 110, and the resistor R2 is connected to a negative electrode side line in parallel with the diode D1. Also, the potential adjustment part 130 is one form of a voltage applying part in the embodiment.

A capacitor C1 is a filter circuit which is connected between the positive and negative electrodes of the inverter 31 on a DC side and smooths a noise component of the DC voltage from the solar cell 110 input via the DC/DC converter 120.

The inverter 31 converts DC power from the solar cell 110 into AC power and outputs it via reactors ACL1 and ACL2.

An output measurement part 140 is connected to the solar cell 110 and measures the output of the solar cell 110. For example, the output measurement part 140 measures a voltage (DCV), an output power amount (power generation amount), an open circuit voltage or a current between the positive electrode and the negative electrode of the solar cell 110. Further, the output measurement part 140 measures the power generation amount, the open circuit voltage and the current for each solar cell string 10. Furthermore, the output measurement part 140 measures an I-V curve of the solar cell 110 and an I-V curve of each solar cell string 10.

The control part 150 includes an output correspondence information acquisition part 151, a start control part 152, and a stop control part 153. The output correspondence information acquisition part 151 acquires output correspondence information indicating a value corresponding to an output value of the solar cell, in other words, information used for estimating the output of the corresponding cell. For example, the output correspondence information acquisition part 151 acquires illuminance or solar radiation of a place in which the solar cell 110 is installed from an illuminance sensor (not illustrated) or a solar radiation sensor (not illustrated). Furthermore, the output correspondence information acquisition part 151 may acquire a current date and time from a timer (not illustrated), and setting information such as a sunrise time and a sunset time of the place in which the solar cell 110 is installed may also be acquired from a memory device.

When the output value corresponding to the output correspondence information does not exceed a threshold value, the start control part 152 determines that an operation condition is satisfied and starts an output recovery operation. The output recovery operation is normally performed in a state in which the solar cell 110 is not generating electric power, such as during nighttime. For this reason, in a state in which the solar cell is generating the electric power, such as during the daytime, it is determined that the operation condition is not satisfied, and the output recovery operation does not start, and in the state in which the solar cell is not generating the electric power, such as during nighttime, it is determined that the operation condition is satisfied, and the output recovery operation starts.

When a stop condition is satisfied while a voltage as the output recovery operation is applied to the solar cell 110, the stop control part 153 stops the application of the voltage. For example, when the morning comes in a state which the output recovery operation is performed during the nighttime and the solar cell 110 starts the power generation (when the open circuit voltage exceeds the threshold value), when an amount of incident light increases to an extent at which the solar cell starts the power generation (when the illuminance or the solar radiation exceeds the threshold value), or when it approaches a time at which the solar cell starts the power generation (for example, sunrise), the stop control part 153 determines that the stop condition is satisfied and stops the output recovery operation.

When a detection result of the output measurement part 140 indicates that the output voltage of the solar cell 110 is less than the threshold value, it is determined as nighttime. Also, when the output voltage of the solar cell 110 is not less than the threshold value, the control part 150 determines that it is daytime. Furthermore, the determination as to whether it is nighttime or daytime is not limited to measuring the output voltage of the solar cell 110. For example, it may be determined based on whether or not it is time that the output voltage of the solar cell 110 is less than the threshold value with reference to the timer. Further, the control part 150 blocks a gate of the inverter 31 or the DC/DC converter 120 when it is determined as nighttime, and operates the inverter 31 or the DC/DC converter 120 when it is determined as daytime. Furthermore, the control of whether the inverter 31 or the DC/DC converter 120 is operated or the gate thereof is blocked may be performed by each driving circuit (not illustrated).

A ground fault detection part 145 detects a ground fault current (leakage current) for each solar cell 110 or each solar cell string 10, obtains a ground fault resistance value (insulation resistance value) between the solar cell 110 or the solar cell string 10 and a ground point, and determines that a ground fault occurs when the obtained ground fault resistance value is smaller than a reference resistance value.

An AC voltage measuring circuit 32 measures an AC voltage at an output terminal of the power conditioner 30. For example, the AC voltage measured by the AC voltage measuring circuit 32 is used for determining the disconnection from the power system.

In the solar power generation system 100 of the embodiment, a rated output of the solar cell 110 is 250 VDC, the DC/DC converter 120 boosts the output of the solar cell 110 to a predetermined voltage DDV (320 VDC in the embodiment), and the inverter 31 converts an output of the DC/DC converter 120 to AC. Also, the solar power generation system 100 of the embodiment is connected to a single-phase three-wire commercial power system and outputs the electric power (for example, 101 Vrms) between the output terminal output via the reactor ACL1 and a frame ground (FG) 38 and between the output terminal output from the inverter 31 via the reactor ACL2 and the frame ground 38 to the commercial power system.

### <<PID recovery process>>

In the solar power generation system 100, as illustrated in Fig. 2, since the voltage DDV between the positive and negative electrodes of the inverter 31 on an input side is, for example, 320 VDC in a daytime state in which the solar cell 110 is generating the electric power, a voltage of the positive electrode with respect to the earth 39 is +160 VDC and a voltage of the negative electrode with respect to the earth 39 is -160 VDC. In a configuration of Fig. 2, since the ground potential of the solar cell 110 becomes equal to the ground potential of the negative electrode side of the inverter 31, a ground voltage of the negative electrode of the solar cell 110 also becomes -160 VDC, and when the output of the solar cell 110 is 250 VDC, a voltage of the positive electrode of the solar cell 110 with respect to the earth 19 is +90 VDC. As described above, in the solar cell 110, since the ground potential of the negative electrode thereof is negative during the power generation, there is a possibility of PID progressing.

Therefore, the solar power generation system 100 of the embodiment blocks gates of the switching element S1 and the inverter 31 in a state such as the nighttime in which the solar cell 110 does not generate the electric power, such that the system interconnection relay 36 is turned on, and thus the electric power on the commercial power system side is supplied to the solar cell side via the inverter 31 in reverse to the daytime, and the voltage DDV is applied between the positive and negative electrodes. Additionally, by dividing this voltage DDV by the resistors R1 and R2 of the potential adjustment part 130, a positive voltage is applied to the negative electrode of the solar cell 110. The solar power generation system 100 according to the embodiment sets the ground potential of the negative electrode of the solar cell 110 to be positive as the output recovery operation when the solar cell 110 is not generating the electric power and thus restores the output reduction due to the PID that has progressed during the power generation.

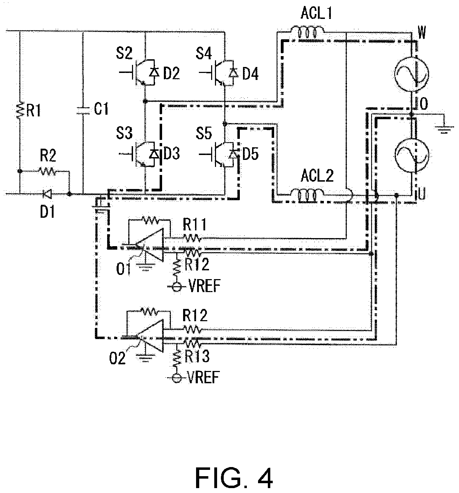

Fig. 4 is a diagram illustrating an example of the inverter 31 and the AC voltage measuring circuit 32. As illustrated in Fig. 4, a bridge is formed in the inverter 31, for example, by switching elements S2 to S5 and freewheeling diodes D2 to D5. Further, the AC voltage measuring circuit 32 has, for example, operational amplifiers O1 and 02, compares the voltage between an output terminal 34 and the frame ground 38 and the voltage between an output terminal 35 and the frame ground 38 with a reference voltage Vref and outputs a difference therebetween as a measurement result.

Additionally, when the gates of the switching elements S2 to S5 are blocked in at night, the inverter 31 serves as a diode bridge, a circuit M1 indicated by a dashed dotted line passing through the operational amplifier O1, the diode D4, the reactor ACL1, and the resistor R12 is constituted, and the electric power of the commercial power system is supplied to the circuit M1 from the output terminal 34 and the frame ground 38. Also, a circuit M2 indicated by a two-point chain line passing through the operational amplifier 02, the diode D5, the reactor ACL2 and the resistor R12 is constituted, and the electric power of the commercial power system is supplied to the circuit M2 from the output terminal 35 and the frame ground 38.

As illustrated in Fig. 4, the electric power supplied to the circuits M1 and M2 is rectified by the diodes D4 and D5, and the voltage DDV is applied between the positive and negative electrodes of the inverter 31. Additionally, by dividing the voltage DDV by the resistors R1 and R2 of the potential adjustment part 130, a positive voltage is applied to the negative electrode of the solar cell 110 as illustrated in Fig. 3. In an example of Fig. 3, the voltage DDV is √2×202 VAC = 286 VDC, and a maximum value Voffset of the voltage DCV (-) applied to the negative electrode of the solar cell 110 is √2×202 VAC×R2/(R1+R2) = 143 VDC. The voltage DCV (-) applied to the negative electrode of the solar cell 110 is determined by a ratio of the resistor R1 to the resistor R2, and in the embodiment, R1:R2 = 1:1.

### <<Flow of PID recovery processing>>

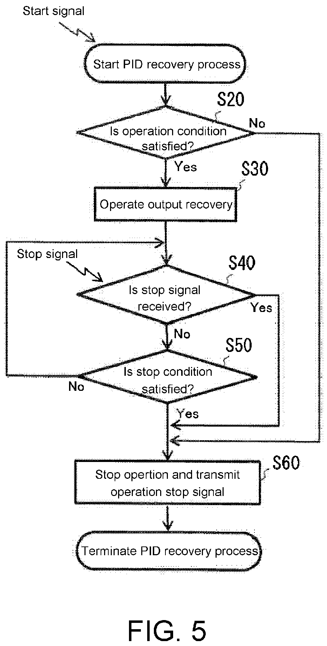

When a manager transmits a start signal of the PID recovery process from a manager terminal 8, the control part 150 of the solar power generation system 100 receives the start signal via a management server 7 and starts, for example, the PID recovery process illustrated in Fig. 5. Here, the manager terminal 8 and the management server 7, and the router 60 and the management server 7 are connected via a network such as Internet, and the manager can send the start signal from a remote location to the solar power generation system 100.

When the PID recovery process of Fig. 5 starts in response to the start signal, the control part 150 firstly determines whether or not the operation condition is satisfied (Step S20). Here, the operation condition is a condition for determining a state in which the solar cell 110 is almost not generating the electric power, like during nighttime, and may be, for example, that the illuminance, the solar radiation, or the open circuit voltage is less than the threshold value or the time is a predetermined time zone such as from sunset to sunrise. Further, the operation condition may be set to a state in which there is no ground fault, that is, there is no insulation deterioration. For example, the ground fault current (leakage current) for each solar cell 110 or solar cell string 10 is detected by the ground fault detection part 145, and a ground fault resistance value (insulation resistance value) between the solar cell 110 or the solar cell string 10 and a ground point is obtained, and when the obtained ground fault resistance value is equal to or more than a reference resistance value, it is determined that there is no ground fault and the operation condition is satisfied.

When the operation condition is satisfied (Yes in Step S20), the control part 150 blocks the gates of the switching element S1 and the inverter 31 and turns on the system interconnection relay 36 so that the electric power on the commercial power system side is supplied to the solar cell side via the inverter 31 in reverse to the daytime and the voltage DDV is applied between the positive and negative electrodes in the inverter 31 on the DC side. Additionally, by dividing the voltage DDV by the resistors R1 and R2 of the potential adjustment part 130, a positive voltage is applied to the negative electrode of the solar cell 110 (Step S30).

Next, the control part 150 determines whether or not a stop signal of the PID recovery process has been received from the manager terminal 8 (Step S40). When the stop signal has not been received (No in Step S40), the control part 150 further determines whether or not a stop condition is satisfied (Step S50). Here, the stop condition is a condition for determining a state in which the solar cell 110 is generating the electric power, like during daytime, or a state in which the solar cell 110 is about to start the power generation, and may be, for example, that the illuminance, the solar radiation, or the open circuit voltage is equal to or more than the threshold value or the time is a predetermined time zone such as from sunrise to sunset.

The control part 150 returns to Step S40 when it is determined that the stop condition is not satisfied (No in Step S50), and turns off the system interconnection relay 36, stops applying of the voltage to the solar cell 110 and stops the output recovery operation (Step S60) when it is determined that the stop condition is satisfied (Yes in Step S50). Also, when it is determined that the operation condition is not satisfied in Step S20 (No in Step S20) or when it is determined in step S40 that the stop signal has been received (Yes in Step S40), the output recovery operation is also stopped (Step S60).

According to the embodiment as described above, it is possible to select the start and stop of the PID recovery process by an operation of the manager, and thus it is possible to appropriately recover the output reduction. In addition, it is possible to select the start and stop of the PID recovery process from a remote place.

### <Second embodiment>

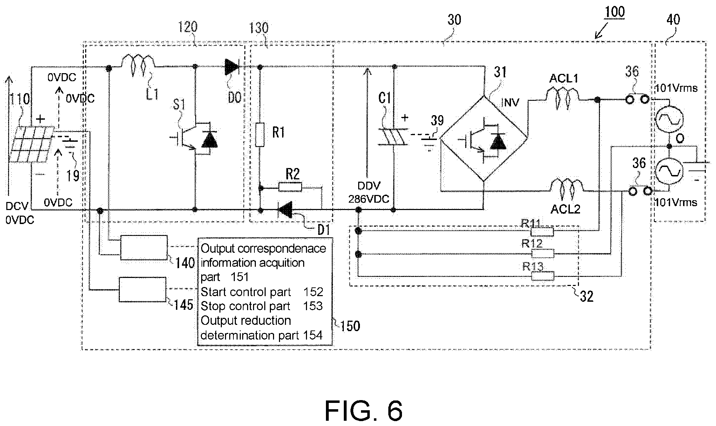

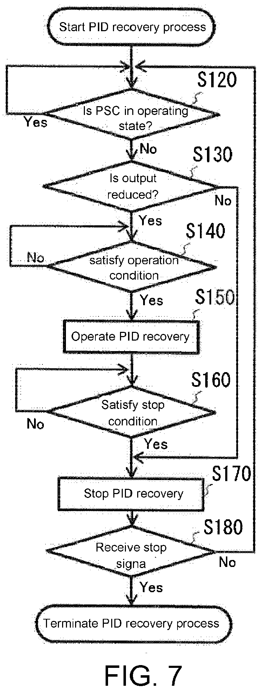

Fig. 6 is a diagram illustrating a configuration of a solar power generation system according to a second embodiment, and Fig. 7 is a diagram illustrating a flow of the PID recovery process according to the second embodiment. The embodiment is different from the first embodiment in that the PID recovery process determines possibility of the PID from a power generation state of the solar cell and automatically performs the PID recovery process, and other configurations are the same as those in the first embodiment. Therefore, a configuration different from that of the first embodiment will be described mainly, and description of the same elements will be omitted. For example, the control part 150 according to the embodiment is different from the above-described first embodiment in the configuration including an output reduction determination part 154, and the other configurations are the same.

When the start signal has been received from the manager terminal 8 by remote control, when a periodic performance timing comes, or when a predetermined timing comes, the control part 150 starts a process of Fig. 7 and determines whether or not the PCS 30 is in an operating state (Step S120). Further, the operating state is a state in which the electric power generated by the solar cell 110 is output from an AC side output terminal of the PCS 30 and is, for example, a state in which the gate of the switching element S1 or the inverter 31 is not blocked, that is, a state in which the switching element S1 or the inverter 31 is operated. When it is determined that the PCS 30 is in the operating state (Yes in Step S120), Step S120 is repeated, and when it is determined that the PCS 30 is not in the operating state (No in Step S120), the process proceeds to next Step S130.

In Step S130, it is diagnosed whether there is a possibility of the PID on the basis of the power generation state of the solar cell. For example, the output reduction determination part 154 of the control part 150 measures the output of the solar cell 110 or the solar cell string 10 by the output measurement part 140, compares a measurement result with a reference value and determines that the output of the solar cell 110 or the solar cell string 10 is lowered when the measurement result is lower than the reference value, that is, when a output reduction condition is satisfied. Here, the output reduction condition is a condition for determining that the output reduction occurs due to the PID, and for example, a measurement value of the amount of the electric power output by the PCS 30, that is, the amount of the electric power generated by the solar cell 110, the amount of the electric power generated by each solar cell string 10, the open circuit voltage of each solar cell string 10, the current of each solar cell string 10, the I-V curve of each solar cell string 10, or the ground fault current is compared with a reference value, and it is diagnosed that there is the possibility of the PID when the value is lower than the reference value (deteriorated state). Further, for each solar cell string 10, the measurement result of another solar cell string 10 may be compared as the reference value. For example, when the measurement value of the power generation amount of the solar cell 110, the power generation amount of each solar cell string 10, the open circuit voltage of each solar cell string 10, or the current of each solar cell string 10 is lower than a value to be compared and a difference therebetween exceeds a threshold value, it is diagnosed that there is the possibility of the PID. Also, when the ground fault current is equal to or larger than a specified value, it may be diagnosed that there is no possibility of the PID so as not to perform the PID recovery operation, that is, the application of the voltage to the solar cell 110. Further, when presence or absence of the ground fault is determined as the operation condition in subsequent Step, the diagnosis of the ground fault current in step S130 may be omitted. Furthermore, the I-V curve of each solar cell string 10 is measured, and when it is lower than an I-V curve to be compared and a difference therebetween exceeds a threshold value, it is diagnosed that there is the possibility of the PID. A plurality of these conditions may be combined.

Next, when it is diagnosed that there is the possibility of the PID in Step S130, the control part 150 determines whether or not an operation condition is satisfied (Step S140). Here, the operation condition is a condition for determining a state in which the solar cell 110 is almost not generating the electric power, like during nighttime, and may be, for example, that the illuminance, the solar radiation, or the open circuit voltage is less than a threshold value or the time is a predetermined time zone such as from sunset to sunrise. Further, the operation condition may be set to a state in which there is no ground fault, that is, there is no insulation deterioration.

When the operation condition is not satisfied (No in Step S140), the control part 150 repeats Step S140, and when the operation condition is satisfied (Yes in Step S140), the control part 150 proceeds to next Step S150.

In Step S150, the control part 150 turns on the system interconnection relay 36, supplies the electric power on the commercial power system side to the solar cell side via the inverter 31 in reverse to the daytime and applies a positive voltage to the negative electrode of the solar cell 110.

Next, the control part 150 determines whether or not a stop condition is satisfied (Step S160). Here, the stop condition is a condition for determining a state in which the solar cell 110 is generating the electric power, like during daytime, or a state in which the solar cell 110 is about to start the power generation, and may be, for example, that the illuminance, the solar radiation, or the open circuit voltage is equal to or more than the threshold value or the time is a predetermined time zone such as from sunrise to sunset.

When it is determined that the stop condition is not satisfied (No in Step S160), the control part 150 repeats Step S160, and when it is determined that the stop condition is satisfied (Yes in Step S160), the control part 150 turns off the system interconnection relay 36, stops the application of the voltage to the solar cell and stops the PID recovery process (Step S170).

Additionally, the control part 150 determines whether or not the stop signal of the PID recovery process has been received from the manager terminal 8 (Step S180). When it is determined that the stop signal has not been received (No in Step S180), the control part 150 returns to Step S120, and when it is determined that the stop signal has been received (Yes in Step S180), the control part 150 terminates the process of FIG. 7. Further, the determination in Step S180 may be omitted, and depending on whether or not a second stop condition is satisfied, for example, whether or not the number of times of performing the PID recovery operation in Step S150 reaches a predetermined number or whether or not the time of applying the voltage to the solar cell 110 reaches the predetermined time, it may be determined whether or not the PID recovery process has been completed. That is, when it is determined that the PID recovery process has been completed, the process of FIG. 7 may be terminated, and when it is determined that the PID recovery process has not been completed, the process may return to Step S120, and when the operation condition is satisfied again, the PID recovery operation may be performed. Furthermore, in the determination whether or not the PID recovery process has been completed, when it is determined in Step S130 that all the solar cell strings 10 do not have the possibility of the PID, it may be determined that the PID recovery process has been completed, and if not, it may be determined that the PID recovery process has not been completed.

According to the embodiment as described above, the presence or absence of the possibility of the PID is determined depending on the power generation state of the solar cell, the PID recovery process is performed when there is the possibility of the PID, and since the PID recovery process is not performed when there is no possibility of the PID, it is possible to properly restore the output reduction.

### <Third embodiment>

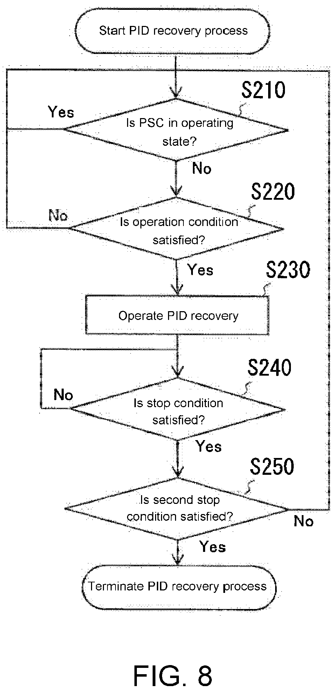

Fig. 8 is a diagram illustrating a flow of the PID recovery process according to a third embodiment. The embodiment is different from the first embodiment in that, when an examiner determines that there is the possibility of the PID, the PID recovery process starts and is performed until a completion condition is satisfied, and other configurations are the same as those in the first embodiment. Therefore, a configuration different from that of the first embodiment will be described mainly, and description of the same elements will be omitted.

First, the examiner inspects the solar cell 110 and determines the possibility of the PID. For example, a measurement value of the amount of the electric power output by the PCS 30, that is, the amount of the electric power of the solar cell 110, the amount of the electric power of each solar cell string 10, the open circuit voltage of each solar cell string 10, the current of each solar cell string 10, the I-V curve for each solar cell string 10, or the ground fault current is compared with a specified value or another PCS or solar cell string 10, and it is diagnosed that a deteriorated state has the possibility of the PID. For example, when the measurement value of the power generation amount of the solar cell 110, the power generation amount of each solar cell string 10, the open circuit voltage of each solar cell string 10, or the current of each solar cell string 10 is lower than a value to be compared and a difference therebetween exceeds a threshold value, it is diagnosed that there is the possibility of the PID. Further, the I-V curve of each solar cell string 10 is measured and displayed on a display or the like for visual recognition, and it is determined that there is the possibility of the PID when it is deteriorated. For example, when it is lower than an I-V curve to be compared and a difference therebetween exceeds a threshold value, it is determined that there is the possibility of the PID. A plurality of these conditions may be combined. For example, when it is lower than the IV curve to be compared and the difference exceeds the threshold value, it is determined that there is the possibility of the PID. In addition, an EL inspection is performed for each solar cell string 10, and when deterioration is recognized, it is determined that there is the possibility of the PID. A plurality of these conditions may be combined. The examiner who has determined that there is the possibility of the PID starts the PID recovery process of Fig. 8. Also, as a result of the inspection, when the ground fault current is higher than a specified value, the PID recovery process of Fig. 8 may not start so as not to perform the PID recovery operation, that is, the application of the voltage to the solar cell 110.

When the PID recovery process of Fig. 8 starts, the control part 150 determines whether or not the PCS 30 is in an operating state (Step S210). Further, the operating state is a state in which the electric power generated by the solar cell 110 is output from an AC side output terminal of the PCS 30 and is, for example, a state in which the gate of the switching element S1 or the inverter 31 is not blocked, that is, a state in which the switching element S 1 or the inverter 31 is operated. When it is determined that the PCS 30 is in the operating state (Yes in Step S210), Step S210 is repeated, and when it is determined that the PCS 30 is not in the operating state (No in Step S210), the process proceeds to next Step S220.

In Step S220, it is determined whether or not the operation condition is satisfied. Here, the operation condition is a condition for determining a state in which the solar cell 110 is almost not generating the electric power, like during nighttime, and may be, for example, that the illuminance, the solar radiation, or the open circuit voltage is less than a threshold value or the time is a predetermined time zone such as from sunset to sunrise. Further, the operation condition may be set to a state in which there is no ground fault, that is, there is no insulation deterioration.

When the operation condition is not satisfied (No in Step S220), the control part 150 returns to Step S210, and when the operation condition is satisfied (Yes in Step S220), the control part 150 proceeds to next Step S230.

In Step S230, the control part 150 turns on the system interconnection relay 36, supplies the electric power on the commercial power system side to the solar cell side via the inverter 31 in reverse to the daytime and applies a positive voltage to the negative electrode of the solar cell 110.

Next, the control part 150 determines whether or not a stop condition is satisfied (Step S240). Here, the stop condition is a condition for determining a state in which the solar cell 110 is generating the electric power, like during daytime, or a state in which the solar cell 110 is about to start the power generation, and may be, for example, that the illuminance, the solar radiation, or the open circuit voltage is equal to or more than the threshold value or the time is a predetermined time zone such as from sunrise to sunset.

When it is determined that the stop condition is not satisfied (No in Step S240), the control part 150 repeats Step S240, and when it is determined that the stop condition is satisfied (Yes in Step S240), the control part 150 determines that whether or not a second stop condition is satisfied (Step S250). Here, the second stop condition is a condition (also referred to as a completion condition) for determining that PID recovery has been sufficiently performed, that is, the PID recovery process has been completed, and in the embodiment, it is whether or not the PID recovery operation in Step S230 has been performed until reaching the predetermined number of times.

When it is determined that the PID recovery operation has not reached the predetermined number of times (No in Step S250), the control part 150 returns to Step S210, and when it is determined that it has not reached the predetermined number of times (Yes in Step S250), the system interconnection relay 36 is turned off, the application of the voltage to the solar cell is stopped, and the PID recovery process is stopped (Step S260). That is, in the case in which the solar cell does not generate power, like during nighttime and the operation condition in Step S220 is not satisfied and the PID recovery process is stopped (suspended), when the recovery has not been sufficiently completed and the PID recovery process has not been completed (when the second stop condition is not satisfied), the process returns to Step S210 and is in a standby state, and when the operation condition is satisfied again in the daytime, the PID recovery operation (Step S230) is performed. Further, the number of times of the PID recovery operation may be set according to an inspection result of the examiner. Furthermore, a time while the voltage is applied to the solar cell 110 is added up, and the second stop condition (completion condition) may be determined depending on whether or not the accumulated time has reached the predetermined time (predetermined period).

According to the embodiment as described above, when there is the possibility of the PID in a field inspection, it is possible to sufficiently restore the output by performing the PID recovery process a predetermined number of times or a predetermined number of periods.

### <Fourth embodiment>

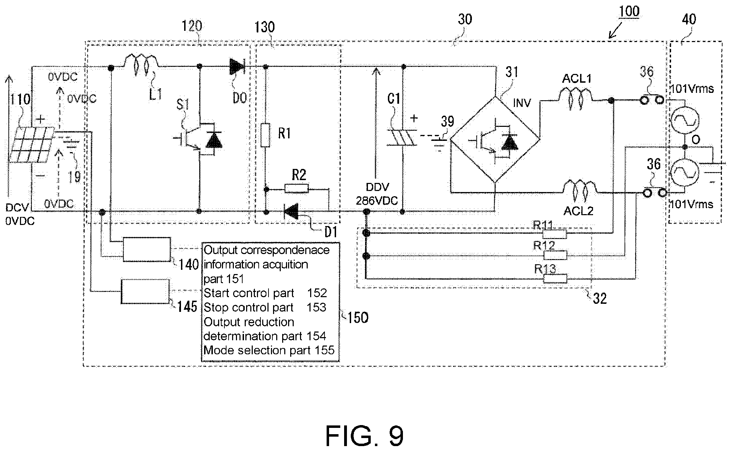

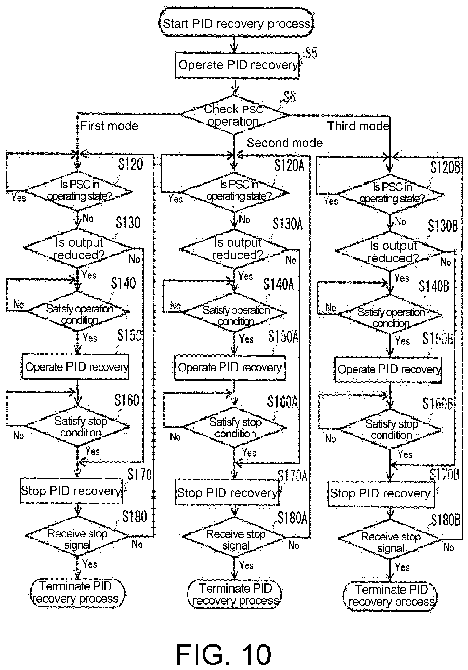

Fig. 9 is a diagram illustrating a configuration of a solar power generation system according to a fourth embodiment, and Fig. 10 is a diagram illustrating a flow of the PID recovery process according to the fourth embodiment. The embodiment is different from the second embodiment in that the PID recovery process is performed in each operation mode according to a type of solar cell 110, and other configurations are the same as those in the second embodiment. Therefore, a configuration different from that of the second embodiment will be described mainly, and description of the same elements will be omitted. For example, the control part 150 of the embodiment is different from the above-described second embodiment in the configuration including a mode selection part 155, and other configurations are the same.

In the embodiment, as illustrated in Fig. 10, when the PID recovery process starts, the mode selection part 155 of the control part 150 first acquires the type of the solar cell 110 (Step S5) and selects a mode according to the type of the solar cell 110 (Step S6). Further, for example, the control part 150 registers setting information corresponding to the type of the solar cell 110 in a memory or the like of the control part 150 while matching the setting information to each mode and reads the setting information of the selected mode whenever the PID recovery process is performed. Furthermore, in the case in which the setting information can be read from the solar cell 110 or a management server 7, the setting information may be read from the solar cell 110 or the management server 7 whenever the PID recovery process is performed. In addition, the embodiment describes an example in which one of a P-type crystal silicon panel, an N-type crystal back contact panel, and a CIS panel is acquired as the type of the solar cell 110, but the disclosure is not limited thereto. For example, instead of the above three types, another type may be acquired, or in addition to the above three types, another type may be acquired. Additionally, the modes corresponding to the types and the setting information for each mode are set in advance.

When the acquired type of the solar cell 110 is the P-type crystalline silicon panel, the control part 150 selects a first mode and proceeds to Step S120. Also, the process of Steps S120 to S190 is the same as that in the above-described example of Fig. 8.

Further, when the acquired type of the solar cell 110 is the N-type crystal back contact panel, the control part 150 selects a second mode and proceeds to Step S210A. Further, the process in Steps S120A to S190A is substantially the same as the above-described process in Steps S120 to S190 in Fig. 5, but when the voltage is applied to the solar cell 110 in Step S150A, a supply path of the voltage is switched by a switch or the like (not illustrated). Accordingly, the potential applied to the solar cell 110 of the N-type crystal back contact panel (back contact type) in step S150A is set to be opposite to the potential applied to the solar cell 110 of the P-type crystal silicon panel. That is, a negative potential is applied to the solar cell 110.

Also, when the acquired type of the solar cell 110 is the CIS panel, the control part 150 selects a third mode and proceeds to Step S120B. Further, the process in Steps S120B to S190B is substantially the same as the process in Steps S120 to S190 in Fig. 5, but in Step S130A, a condition corresponding to the CIS panel is used as a condition such as a threshold for determining the possibility of the PID. Since an occurrence frequency or a degree of influence of the PID is different between the P-type crystal silicon panel and CIS panel, conditions for determination are set in advance. Also, in Step S180, when the completion of the PID recovery process is determined using the second stop condition, the conditions corresponding to the CIS panel may be used as this conditions. Further, even when another type of the solar cell 110 is used, the completion of the PID recovery process may be determined using the second stop condition corresponding to the type of the solar cell 110.

In Fig. 10, an example in which the same process as that in the second embodiment is performed as the process selectively performed after Step S6 is illustrated, but the present embodiment is not limited thereto, and the process of Fig. 5 according to the first embodiment or the process of Fig. 8 according to the third embodiment may be performed.

According to the embodiment as described above, since the PID recovery process is performed by switching to a mode suitable for each type of the solar cell 110, it is possible to appropriately restore the output reduction according to the type of the solar cell 110.

### <Fifth embodiment>

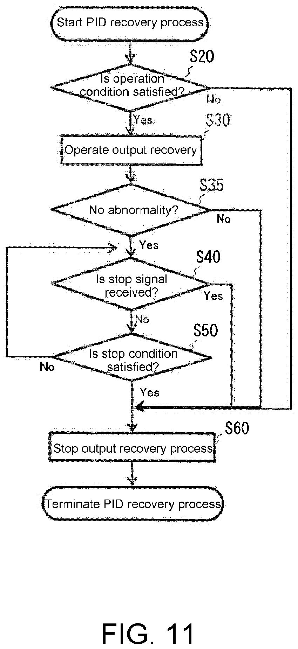

Fig. 11 is a diagram illustrating a flow of the PID recovery process according to the fifth embodiment. The embodiment is different from the first embodiment in that the current value and voltage value at the time of the PID recovery operation are monitored and the PID recovery process is stopped when an abnormality occurs, and other configurations are the same as those in the first embodiment. Therefore, a configuration different from that of the first embodiment will be described mainly, and description of the same elements will be omitted.

As illustrated in Fig. 11, when the operation condition is satisfied in Step S20 and the PID recovery operation starts (Step S30), the control part 150 detects the current value or the voltage value at the time of the PID recovery operation by the output measurement part 140 and determines whether or not it is within a predetermined range, that is, whether or not the abnormality occurs (Step S35). As described above, in the embodiment, the output measurement part 140 is one form of a recovery time measurement part. Additionally, when the current value or the voltage value is within the predetermined range (Yes in Step S35), the process proceeds to Step S40, and when the current value or the voltage value is not within the predetermined range (No in Step S35), it is determined that the abnormality occurs and the process proceeds to Step S60 and the PID recovery process is terminated. When the abnormality occurs and the PID recovery process is terminated, a message indicating that the abnormality occurs may be transmitted to a predetermined destination (address) such as the manager terminal 8 or the like. Further, an output device (not shown) such as a speaker or a warning lamp may be provided in the PCS 30, the solar cell 110 or the like, and an alarm may be issued when the abnormality occurs and the PID recovery process is terminated.

Further, in Fig. 11, an example in which, in the same process as in Fig. 5 according to the first embodiment, Step S35 of detecting the current value or the voltage value at the time of the PID recovery operation (Step S30) and determining whether or not then abnormality occurs is added is illustrated, but the embodiment is not limited thereto, and in the process of Fig. 7 according to the second embodiment, Step of detecting the current value or the voltage value at the time of the PID recovery operation (Step S150) and determining whether or not the abnormality occurs may be added similarly to Fig. 11. Further, in the process of Fig. 8 according to the third embodiment, Step of detecting the current value or voltage value at the time of the PID recovery operation (Step S230) and determining whether or not an abnormality occurs may be added similarly to Fig. 11.

As described above, according to the embodiment, in the case in which the abnormality occurs in the current value or the voltage value when the PID recovery operation starts, the PID recovery operation can be stopped. Accordingly, for example, even when a sudden ground fault occurs in the PID recovery operation, the PID recovery operation is stopped and the system interconnection relay 36 is turned OFF. Alternatively, by shutting off other breakers connected to a system, it is possible to prevent trip of an earth leakage breaker in advance.

Moreover, by notifying a message to a predetermined destination at the time of the occurrence of the abnormality, it is possible to notify the abnormality promptly to the manager or the like. Further, even when the solar cell 110 is stolen or destroyed during the PID recovery operation, a message or an alarm indicating that the current value or the voltage value is out of the predetermined range and the abnormality occurs is notified or output. Also, since the PID recovery operation is normally performed in the nighttime, the configuration for determining and outputting the abnormality of the embodiment can also be used as a means for detecting theft or destruction at night and outputting an alarm.

### [Explanation of sign]

1: solar cell module, 7: management server, 8: manager terminal, 10: solar cell string, 30: power conditioning system, 31: inverter, 32: AC voltage measuring circuit, 36: system interconnection relay, 40: distribution board, 50: communication unit, 60: router, 100: solar power generation system, 110: solar cell, 120: converter, 130: potential adjustment part, 140: output measurement part, 145: ground fault detection part, 150: control part

## Claims

1. A solar power generation system (100) which has a solar cell (110), converts an output of the solar cell (110) to predetermined AC power and outputs the converted AC power, comprising:
a voltage application part configured to apply a DC voltage to the solar cell (110) and to perform an output recovery operation; and
a stop control part (153) configured to stop application of the DC voltage when a stop condition is satisfied after the DC voltage is applied.

2. The solar power generation system (100) according to claim 1, wherein the stop condition is reception of a stop signal transmitted by an operation of a manager.

3. The solar power generation system (100) according to claim 1 or 2, further comprising:
an output correspondence information acquisition part (151) configured to acquire output correspondence information indicating a value corresponding to an output value of the solar cell (110),
wherein, when the output value corresponding to the output correspondence information exceeds a threshold value, it is determined that the stop control part (153) satisfies the stop condition, and the application of the DC voltage is stopped.

4. The solar power generation system (100) according to claim 1 or 2, further comprising:
an output correspondence information acquisition part (151) configured to acquire output correspondence information indicating a value corresponding to an output value of the solar cell (110); and
a start control part (152) configured to determine that an operation condition is satisfied and enable application of the DC voltage by the voltage application part when the output value corresponding to the output correspondence information does not exceed a threshold value.

5. The solar power generation system (100) according to claim 4, further comprising:
an output measurement part (140) configured to measure an output of the solar cell (110); and
an output reduction determination part (154) configured to compare a measurement result of the output with a reference value and to determine that the output of the solar cell (110) is reduced when the measurement result is lower than the reference value,
wherein, when it is determined that the output of the solar cell (110) is reduced, the start control part (152) determines that an output reduction condition is satisfied, and when the operation condition and the output reduction condition are satisfied, the start control part (152) starts the application of the DC voltage to the solar cell (110).

6. The solar power generation system (100) according to claim 5, wherein the solar cell (110) comprises a plurality of solar cell strings (10), the output measurement part (140) measures an output of each solar cell string (10) in the plurality of solar cell strings (10), and the output reduction determination part (154) compares the measurement result of the output of each solar cell string (10) with an output of another solar cell string (10) as a reference value.

7. The solar power generation system (100) according to claim 5 or 6, wherein, when a first stop condition is set to a case in which the output value corresponding to the output correspondence information exceeds a threshold value and the first stop condition is satisfied, the stop control part (153) stops the application of the DC voltage by the voltage application part, and the start control part (152) is in a standby state in which the application of the DC voltage by the voltage application part is restarted when the operation condition and the output reduction condition are satisfied next, and
when a second stop condition is set to a case in which the number of times, a period of time or an electric power amount of the application of the DC voltage by the voltage application part exceeds a threshold value and the second stop condition is satisfied, the stop control part (153) stops the application of the DC voltage by the voltage application part, and even when the operation condition and the output reduction condition are satisfied next, the start control part (152) does not restart the application of the DC voltage by the voltage application part.

8. The solar power generation system (100) according to any one of claims 1 to 7, further comprising:
a mode selection part (155) configured to acquire a type of the solar cell (110) and to select a mode assigned to the acquired type of the solar cell (110) in advance,
wherein the voltage application part has a plurality of modes for varying an application state of the DC voltage according to the type of the solar cell (110), and the application of the DC voltage is performed according to the mode selected by the mode selection part (155).

9. The solar power generation system (100) according to any one of claims 1 to 8, further comprising:
a recovery time measurement part (140) configured to measure a recovery time voltage applied to the solar cell (110) or a recovery time current flowing through the solar cell (110) when an output recovery operation is performed by applying the DC voltage to the solar cell (110),
wherein, when the recovery time voltage or the recovery time current deviates from a predetermined range, the stop control part (153) stops the application of the DC voltage.

10. A DC/DC converter (120) used in the solar power generation system (100) according to any one of claims 1 to 9.

11. A power conditioner used in the solar power generation system (100) according to any one of claims 1 to 9, comprising:
a non-insulated type DC/DC converter (120) configured to boost a DC voltage from the solar cell (110) input from an input terminal at a predetermined boosting ratio and to output the DC voltage from an output terminal; and
an inverter (31) configured to convert the DC voltage output from the output terminal of the DC/DC converter into an AC voltage.
